# EUROPÄISCHE PATENTSCHRIFT

(11) **EP 1 527 915 B1**
(45) Veröffentlichungstag und Bekanntmachung des Hinweises auf die Patenterteilung: **21.06.2006**
(21) Anmeldenummer: 04026021.8
(22) Anmeldetag: 03.11.2004
(51) Int. Cl.: B60H 1/00

(54) **Vorrichtung und Verfahren zur Lufttemperierung für eine Kraftfahrzeug-Klimaanlage**
Device and method for controlling air temperature for a vehicle air conditioning system
Dispositif et méthode de réglage de la temperature de l'air dans un système de climatisation d'un véhicule

(30) Priorität: 03.11.2003 DE 10351548
(43) Veröffentlichungstag der Anmeldung: 04.05.2005
(73) Patentinhaber: Behr GmbH & Co. KG, 70469 Stuttgart (DE)
(72) Erfinder: Kiel, Ronny, 70771 Leinfelden-Oberaichen (DE); Lindauer, Sascha, 73553 Alfdorf (DE); Müller, Michael, 71732 Tamm (DE)

(56) Entgegenhaltungen:
- DE-A1- 3 335 768
- DE-C1- 19 704 432
- DE-C1- 19 955 616
- US-B2- 6 607 029

## Beschreibung

Die Erfindung betrifft eine Vorrichtung zur Lufttemperierung von ein- oder mehrzonigen Kraftfahrzeug-Klimaanlagen gemäß Anspruch 1 sowie ein entsprechendes Verfahren. US-6 607 029 zeigt eine Vorrichtung gemäß dem Oberbegriff des Anspruchs 1

Bei zwei- und mehrzonigen Kraftfahrzeug-Klimaanlagen, die optional einzonig aufgebaut werden können und über Rückschlagklappen verfügen, kann es zu unterschiedlichen Ausblastemperaturen an den Austritten von gleich zu temperierenden Zonen kommen. Dies tritt insbesondere auf, wenn die Anlagenaustritte unterschiedlich angedrosselt werden.

Eine der Klappen hat hierbei die Funktion einer Rückschlagklappe, deren Öffnungswinkel lediglich vom Druckniveau und den Strömungsbedingungen abhängt, die andere Klappe ist eine manuell oder motorisch bewegte Klappe zur direkten Beeinflussung der Mischlufttemperatur.

Sind die Rückschlagklappen für beide Mischräume einzeln aufgehängt, jedoch die angesteuerten Klappen zur direkten Beeinflussung der Lufttemperatur für beide Mischräume durchgekoppelt, so hängt der jeweilige Öffnungswinkel der frei beweglichen Rückschlagklappen vom jeweiligen Druckniveau und den Strömungsbedingungen in den Mischräumen ab.

So lange alle betreffenden Anlagenaustritte gleich angedrosselt sind, stellen sich in den Mischräumen identische Lufttemperaturen, und Strömungsverhältnisse ein. Wird hingegen einer der Anlagenaustritte anders angedrosselt, so verändern sich Druck und Strömungsverhältnisse in den Mischräumen und damit die Öffnungswinkel der Rückschlagklappen. Dies hat über die gleich zu temperierenden Zonen unterschiedliche Ausblastemperaturen zur Folge.

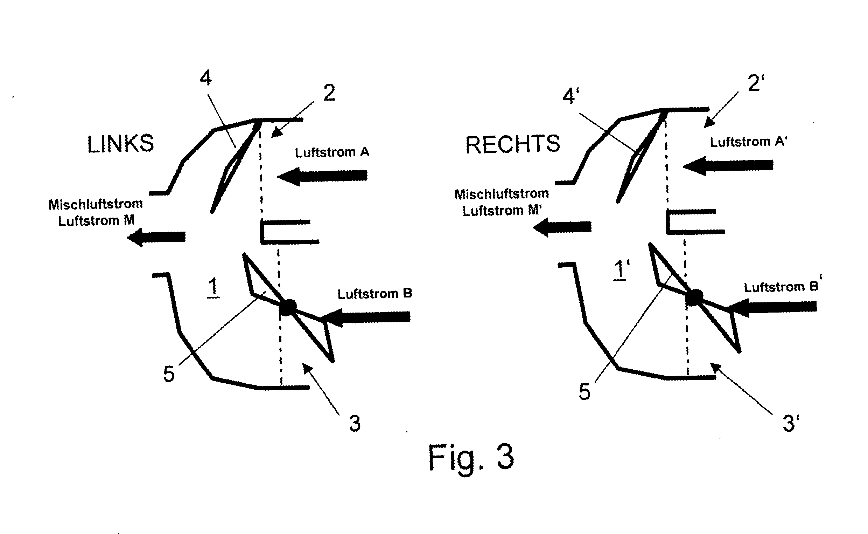

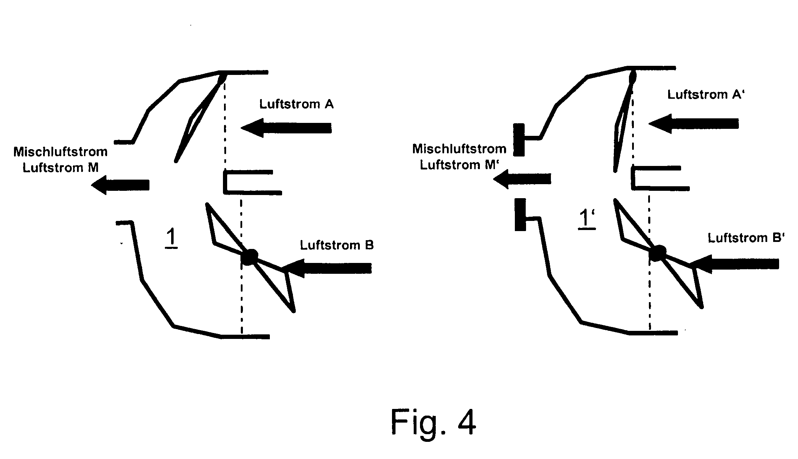

Eine bekannte mehrzonige Klimaanlage weist einen ersten und einen zweiten Mischraum 1 und 1' auf, wie in Fig. 3 und Fig. 4 dargestellt. Hierbei wird jedem der Mischräume 1, 1' über einen ersten Luftkanal 2, 2' ein Luftstrom A, A' mit einer ersten Temperatur T_{A}, T_{A}' und einem ersten Volumenstrom und über einen zweiten Luftkanal 3, 3' ein Luftstrom B, B' mit einer zweiten Temperatur T_{B}, T_{B}' und einem zweiten Volumenstrom zugeführt, die im Mischraum 1, 1' jeweils vermischt werden und als Luftstrom M, M' mit einer Temperatur T_{M}, T_{M}' über einen Luftkanal dem Fahrzeuginnenraum zugeführt werden. Hierbei unterscheiden sich die Temperaturen T_{A}, T_{B} bzw. T_{A}', T_{B}' sowie die Volumenströme der beiden Luftströme A, und B bzw. A' und B'. Zwischen dem Mischraum 1, 1' und dem ersten Luftkanal 2, 2' ist jeweils eine sich frei einstellende Rückschlagklappe 4, 4' angeordnet, wobei die Rückschlagklappen 4, 4' der beiden Mischräume 1, 1' unabhängig voneinander sind. Zwischen dem Mischraum 1, 1' und dem zweiten Luftkanal 3, 3' ist jeweils eine direkt angesteuerte Klappe 5 angeordnet, wobei die Klappen 5 der beiden Mischräume 1, 1' durchgekoppelt sind.

In den Fig. 3 ist der Zustand rechts und links mit identischen Drosselungsverhältnissen dargestellt, wodurch sich identische Klappenstellungen der frei beweglichen Rückschlagklappen 4, 4' ergeben, was zu gleichen Verhältnissen der beiden Luftströme A und B bzw. A' und B' in den beiden Mischräumen 1, 1' und hieraus resultierenden identischen Mischlufttemperaturen T_{M}, T_{M}' führt.

Die unterschiedliche Androsselung der Austritte, wie sie in Fig. 4 angedeutet ist, bewirkt unterschiedliche Druck- und Strömungsverhältnisse in den beiden Mischräumen 1, 1'. Hieraus resultieren unterschiedliche Luftmengenverhältnisse der Luftströme A und B bzw. A' und B'. Sind die beiden Luftströme A und B bzw. A' und B' unterschiedlich temperiert ergeben sich somit auch unterschiedliche Mischlufttemperaturen T_{M,} T_{M}'.

Es ist Aufgabe der Erfindung, eine verbesserte Vorrichtung zur Lufttemperierung von ein- oder mehrzonigen Kraftfahrzeug-Klimaanlagen zur Verfügung zu stellen.

Diese Aufgabe wird gelöst durch eine Vorrichtung zur Lufttemperierung von ein- oder mehrzonigen Kraftfahrzeug-Klimaanlagen mit den Merkmalen des Anspruchs 1. Vorteilhafte Ausgestaltungen sind Gegenstand der Unteransprüche.

Zur Vermeidung unterschiedlicher Mischlufttemperaturen, wie sie gemäß dem Stand der Technik auftreten, ist zwischen den identisch zu temperierenden Zonen ein Mittel zum Druckausgleich vorgesehen, das die Drücke in den beiden Mischräumen resepektive Luftführungen ausgleicht, so dass sich die frei selbsteinstellenden Rückschlagklappen entsprechend ausrichten und die Mischtemperaturen in beiden Mischräumen einander entsprechen. Hierfür wird bevorzugt zwischen den relevanten Zonen ein Bypass vorgesehen, welcher unterschiedliche Druckverhältnisse ausgleicht. Dabei ist der Bypass vorzugsweise zwischen zwei Mischräumen oder zwei Luftkanälen vorgesehen, über die die temperierte Luft dem Fahrzeuginnenraum zugeführt wird.

Der Druckausgleich kann gemäß einer Variante auch mittels eines Bypasses mit einem variablen Öffnungsquerschnitt erfolgen, welcher sich den jeweiligen Druckverhältnissen anpasst. In einfachster Ausführungsform ist hierbei ein Bypass ohne Absperrfunktion vorgesehen.

Es sind auch beliebige andere Verschiebungen der Luftmengenverhältnisse möglich, damit wieder alle zur Luftmischung beteiligten Luftströme im gleichen Verhältnis zueinander stehen.

Ebenfalls kann eine Homogenisierung der Druckniveaus durch Überdruckklappen erfolgen, welche für konstante Drücke in den Mischkammern sorgen, sowohl zur Umgebungsluft, als auch zur Luft im Inneren der Klimaanlage. Anstelle von Überdruckklappen ist auch ein partiell luftdurchlässig ausgebildetes Luftführungsgehäuse möglich, wofür beispielsweise eine Perforierung des Kunststoffes oder ein vor einer Öffnung angeordnetes Flies vorgesehen sein kann. Die Angleichung des Druckniveaus kann auch durch automatisches Androsseln des zweiten Mischluftaustritts bzw. der weiterführenden Luftkanäle erfolgen.

Das Durchkoppeln der Rückschlagklappen ergibt eine zusätzliche, geringe Verbesserung.

Im Folgenden wird die Erfindung anhand dreier Ausführungsbeispiele teilweise unter Bezugnahme auf die Zeichnung im Einzelnen erläutert. In der Zeichnung zeigen:
- Fig. 1: eine schematische Ansicht zweier Mischräume und der entsprechenden weiterführenden Luftkanäle gemäß dem ersten Ausführungsbeispiel,

- Fig. 2: eine schematische Ansicht zweier Mischräume und der entsprechenden weiterführenden Luftkanäle gemäß dem zweiten Ausführungsbeispiel,
- Fig. 3: eine schematische Ansicht einer bekannten mehrzonigen Klimaanlage mit zweie Mischräumen mit Klappen bei gleichen Drosselverhältnissen, und
- Fig. 4: eine schematische Ansicht einer bekannten mehrzuniger Klimaanlage mit zeweie Mishräumen mit Klappen bei ungleichen Drosselverhältnissen.

Eine mehrzonige Klimaanlage weist einen linken Mischraum 1 und rechten Mischraum 1' auf, wie in Fig. 3 dargestellt. Hierbei wird jedem der Mischräume 1, 1' über einen ersten Luftkanal 2, 2' ein Luftstrom A, A' mit einer ersten Temperatur T_{A}, T_{A}' und über einen zweiten Luftkanal 3, 3' ein Luftstrom B, B' mit einer zweiten Temperatur T_{B}, T_{B}' zugeführt, die im Mischraum 1, 1' jeweils vermischt werden und als Luftstrom M, M' mit einer Temperatur T_{M}, T_{M}' über einen Luftkanal, in dem oder in einem Teilzweig von dem mindestens ein variables Drosselorgan angeordnet ist (z.B. Austrittsgrill), dem Fahrzeuginnenraum zugeführt werden. Hierbei unterscheiden sich die Temperaturen T_{A}, T_{B} bzw. T_{A}', T_{B}' der beiden Luftströme A und B bzw. A' und B'. Zwischen dem Mischraum 1, 1' und dem ersten Luftkanal 2, 2' ist jeweils eine sich frei einstellende Rückschlagklappe 4, 4' angeordnet, wobei die Rückschlagklappen 4, 4' der beiden Mischräume 1, 1' unabhängig voneinander sind. Zwischen dem Mischraum 1, 1' und dem zweiten Luftkanal 3, 3' ist jeweils eine direkt angesteuerte Klappe 5 angeordnet, wobei die Klappen 5 der beiden Mischräume 1 durchgekoppelt sind.

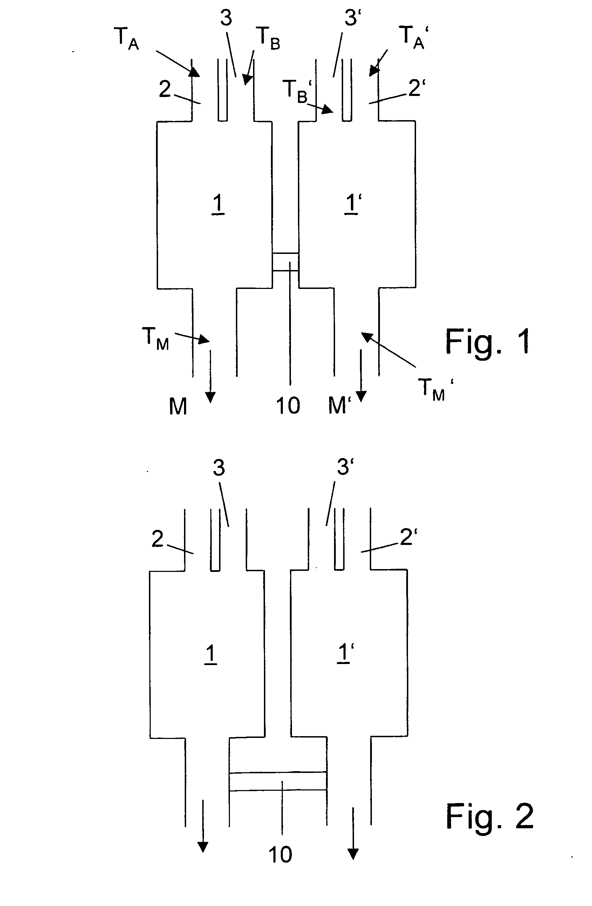

Um die Druckdifferenz zwischen den beiden Mischräumen 1, 1' zu beseitigen. ist gemäß dem ersten Ausführungsbeispiel als Mittel zum Druckausgleich ein direkter Bypass 10 zwischen den beiden Mischräumen 1, 1' vorgesehen, wie in Fig. 1 schematisch angedeutet. Über den Bypass 10 kann Luft von dem Mischraum 1 oder 1', dessen Mischluftstrom stärker gedrosselt ist, in den anderen Mischraum 1' bzw. 1 gelangen, so dass ein Druckausgleich erfolgt und die beiden sich frei einstellenden Rückschlagklappen 4, 4' in Verbindung mit den direkt angesteuerten Klappen 5 auf beiden Seiten Luft von gleicher Temperatur (Mischlufttemperatur T_{M}, T_{M}') dem Fahrzeuginnenraum zuführen.

Gemäß dem in Fig. 2 dargestellten zweiten Ausführungsbeispiel ist der Bypass 10, der das Mittel zum Druckausgleich bildet, nicht zwischen den Mischräumen 1 und 1' sondern zwischen den hieran anschließenden Luftkanälen vorgesehen, was jedoch einen entsprechenden Effekt hat.

Es ist gemäß dem dritten Ausführungsbeispiel auch möglich, zwei Bypässe vorzusehen, d.h. das erste und das zweite Ausführungsbeispiel werden miteinander kombiniert, so dass beide Bypässe gemeinsam das Mittel zum Druckausgleich bilden.

Anstelle von rechts und links können die beiden Mischräume natürlich auch oben und unten angeordnet sein.

### Bezugszeichenliste

1, 1' Mischraum
2, 2', 3, 3' Luftkanal
4, 4' Rückschlagklappe
5 Klappe
10 Bypass

A, A', B, B', M, M' Luftstrom
T_{A}, T_{A}', T_{B}, T_{B}', T_{M}, T_{M}' Temperatur

## Patentansprüche

1. Vorrichtung zur Lufttemperierung von ein- oder mehrzonigen Kraftfahrzeug-Klimaanlagen, wobei mindestens zwei getrennt ausgebildete Mischräume (1, 1') zum Mischen von mindestens je zwei unterschiedlich temperierten Luftströmen (A, B bzw. A', B') vorgesehen sind, die nach dem Mischen als gemeinsame temperierte Luftströme (M, M') dem Fahrzeuginnenraum zugeführt werden, wobei einer der Luftströme (B, B') in jeden Mischraum (1, 1') über direkt angesteuerte Klappen (5) gelangt und die Klappen (5) miteinander gekoppelt sind, **dadurch gekennzeichnet, dass** einer der Luftströme (A, A') in jeden Mischraum (1, 1') über eine unabhängig voneinander frei selbsteinstellenden Rückschlagklappe (4, 4') gelangt und ein Mittel zum Druckausgleich zwischen den Mischräumen (1, 1') und/oder den Luftkanälen, über die die temperierten Luftstrome (M, M') dem Fahrzeuginnenraum zugeführt werden, vorgesehen ist.

2. Vorrichtung nach Anspruch 1, **dadurch gekennzeichnet, dass** das Mittel zum Druckausgleich durch mindestens einen Bypass (10) gebildet ist.

3. Vorrichtung nach Anspruch 1 oder 2, **dadurch gekennzeichnet, dass** das Mittel zum Druckausgleich zwischen den Mischräumen (1, 1') vorgesehen ist.

4. Vorrichtung nach einem der vorhergehenden Ansprüche, **dadurch gekennzeichnet, dass** das Mittel zum Druckausgleich zwischen den Luftströmen (M, M') vorgesehen ist.

5. Vorrichtung nach einem der vorhergehenden Ansprüche, **dadurch gekennzeichnet, dass** das Mittel zum Druckausgleich ein Bypass mit einem variablen Öffnungsquerschnitt ist.

6. Vorrichtung nach einem der vorhergehenden Ansprüche, **dadurch gekennzeichnet, dass** die Rückschlagklappen (4,4') miteinander gekoppelt sind.

7. Verfahren zur Lufttemperierung von ein- oder mehrzonigen Kraftfahrzeug-Klimaanlagen, wobei mindestens zwei getrennt ausgebildete Mischräume (1, 1') zum Mischen von mindestens je zwei unterschiedlich temperierten Luftströmen (A, B bzw. A', B') vorgesehen sind, die nach dem Mischen als gemeinsame temperierte Luftströme (M, M') dem Fahrzeuginnenraum zugeführt werden, wobei einer der Luftströme (B, B') in jeden Mischraum (1, 1') über direkt angesteuerte Klappen (5) gelangt und die Klappen (5) miteinander gekoppelt sind, **dadurch gekennzeichnet, dass** einer der Luftströme (A, A') in jeden Mischraum (1, 1') über eine unabhängig voneinander frei selbsteinstellenden Rückschlagklappe (4, 4') gelangt und ein Druckausgleich zwischen den Mischräumen (1, 1') und/oder den Luftkanälen, über die die temperierten Luftströme (M, M') dem Fahrzeuginnenraum zugeführt werden, erfolgt.

8. Verfahren nach Anspruch 7, **dadurch gekennzeichnet, dass** Luft von dem Mischraum (1 oder 1'), in dem ein höherer Druck herrscht, zum anderen Mischraum (1' bzw. 1) über einen oder mehrere Bypässe (10) strömt.

9. Verfahren nach Anspruch 7 oder 8, **dadurch gekennzeichnet, dass** im Falle einer Druckdifferenz Luft von dem Luftkanal mit höherem Druck, über den der eine temperierte Luftstrom (M, M') dem Fahrzeuginnenraum zugeführt wird, zum anderen Luftkanal, über den der andere temperierte Luftstrom (M, M') dem Fahrzeuginnenraum zugeführt wird, über einen oder mehrere Bypässe (10) strömt.

10. Verfahren nach Anspruch 8 oder 9, **dadurch gekennzeichnet, dass** der Bypass geregelt wird.

11. Verfahren nach Anspruch 10, **dadurch gekennzeichnet, dass** der Bypass in Abhängigkeit der Druckdifferenz und/oder der Temperatur (T_{M}, T_{M}') in den beiden Luftkanälen, über die die temperierten Luftströme(M, M') dem Fahrzeuginnenraum zugeführt werden, geregelt wird.

12. Verfahren einem der Ansprüche 7 bis 11, **dadurch gekennzeichnet, dass** eine Regelung dahingehend erfolgt, dass die beiden Luftströme (A, A' und B, B') in beiden Mischräumen (1, 1') im gleichen Verhältnis zueinander stehen.

13. Verfahren einem der Ansprüche 7 bis 12, **dadurch gekennzeichnet, dass** die Klappenstellung der Klappen (5) und/oder der in Abhängigkeit einer Druck- und/oder Temperaturdifferenz zwischen einem Punkt im Luftkanalsystem und dem Fahrzeuginnenraum geregelt wird.

14. Verfahren einem der Ansprüche 7 bis 13, **dadurch gekennzeichnet, dass** die Klappenstellung der Klappen (5) in Abhängigkeit einer Androsselung am Luftaustritt geregelt wird.

## Claims

1. Device for controlling the air temperature of single- or multiple-zone motor vehicle air-conditioning units, in which at least two separately formed mixing chambers (1, 1') are provided for mixing in each case two airstreams (A, B or A' B') with different temperatures which, after mixing, are passed as mixed airstreams (M, m') with a common controlled temperature to the inside space of the vehicle, such that one of the airstreams (B, B') passes into each mixing chamber (1, 1') via directly controlled valves (5) and the said valves (5) are coupled with one another, **characterised in that** one of the airstreams (A, A') passes into each mixing chamber (1, 1') via an independently self-adjusting non-return valve (4, 4') and means are provided for pressure equalisation between the mixing chambers (1, 1') and/or the air ducts through which the temperature-controlled mixed airstreams (M, M') are passed into the inside space of the vehicle.

2. Device according to Claim 1, **characterised in that** the pressure equalisation means consist of at least one bypass (10).

3. Device according to Claims 1 or 2, **characterised in that** the pressure equalisation means are provided between the mixing chambers (1, 1').

4. Device according to any of the preceding claims, **characterised in that** the pressure equalisation means are provided between the airstreams (M, M').

5. Device according to any of the preceding claims, **characterised in that** the pressure equalisation means consist of a bypass with variable aperture cross-section.

6. Device according to any of the preceding claims, **characterised in that** the non-return valves (4, 4') are coupled to one another.

7. Method for controlling the air temperature of single- or multiple-zone air-conditioning units, in which at least two separately formed mixing chambers (1, 1') are provided for mixing two respective airstreams (A, B or A', B') with different temperatures which, after mixing, are passed as mixed airstreams (M, M') with a common controlled temperature into the inside space of the vehicle, such that one of the airstreams (B, B') passes into each mixing chamber (1, 1') via directly controlled valves (5) and the said valves (5) are coupled with one another, **characterised in that** one of the airstreams (A, A') passes into each respective mixing chamber (1, 1') via an independently self-adjusting non-return valve (4, 4') and pressure equalisation takes place between the mixing chambers (1, 1') and/or the air ducts through which the temperature-controlled airstreams (M, M') are passed into the inside space of the vehicle.

8. Method according to Claim 7, **characterised in that** air from the mixing chamber (1 or 1') in which the pressure is highest flows to the other mixing chamber (1' or 1 respectively) through one or more bypasses (10).

9. Method according to Claims 7 or 8, **characterised in that** in the event of a pressure difference, air flows through one or more bypasses (10) from the air duct in which the pressure is higher and through which one temperature-controlled airstream (M, M') is passed to the inside space of the vehicle, to the other air duct through which the other temperature-controlled airstream (M, M') is passed to the inside space of the vehicle.

10. Method according to Claims 8 or 9, **characterised in that** the bypass is controlled.

11. Method according to Claim 10, **characterised in that** the bypass is controlled as a function of the pressure difference and/or the temperature (T_{M}, T_{M'}) in the two air ducts through which the temperature-controlled airstreams (M, M') are passed to the inside space of the vehicle.

12. Method according to any of Claims 7 to 11, **characterised in that** regulation is carried out in such manner that the two airstreams (A, A; and B, B') are in the same ratio to one another in the two mixing chambers (1, 1').

13. Method according to any of Claims 7 to 12, **characterised in that** the valve setting of the valves (5) is regulated as a function of a pressure and/ot temperature difference between a point in the air duct system and the inside space of the vehicle.

14. Method according to any of Claims 7 to 13, **characterised in that** the valve setting of the valves (5) is regulated as a function of throttling at the air outlet.

## Revendications

1. Dispositif pour le réglage de la température de l'air sur des installations de climatisation de véhicule à une ou plusieurs zones, au moins deux espaces de mélange (1, 1') conçus séparément étant prévus pour le mélange d'au moins respectivement deux flux d'air (A, B et A', B') réglés différemment au niveau de la température, qui sont amenés après le mélange sous la forme de flux d'air (M, M'), réglés ensemble au niveau de la température à l'intérieur du véhicule, l'un des flux d'air (B, B') arrivant dans chaque espace de mélange (1, 1') au moyen de clapets (5) commandés directement et les clapets (5) étant couplés entre eux, **caractérisé en ce que** l'un des flux d'air (A, A') arrive dans chaque espace de mélange (1, 1') par un clapet antiretour (4, 4') s'autoréglant librement indépendamment l'un de l'autre et un moyen est prévu pour l'équilibrage de pression entre les espaces de mélange (1, 1' ) et/ou les canaux d'air, par lesquels les flux d'air (M, M') réglés au niveau de la température sont amenés à l'espace intérieur du véhicule.

2. Dispositif selon la revendication 1, **caractérisé en ce que** le moyen pour l'équilibre de pression est formé par au moins une dérivation (10).

3. Dispositif selon la revendication 1 ou 2, **caractérisé en ce que** le moyen pour l'équilibré de pression est prévu entre les espaces de mélange (1, 1').

4. Dispositif selon l'une quelconque des revendications précédentes, **caractérisé en ce que** le moyen pour l'équilibre de pression est prévu entre les flux d'air (M, M').

5. Dispositif selon l'une quelconque des revendications précédentes, **caractérisé en ce que** le moyen pour l'équilibre de pression est une dérivation avec une section d'ouverture variable.

6. Dispositif selon l'une quelconque des revendications précédentes, **caractérisé en ce que** les clapets antiretour (4, 4') sont couplés entre eux.

7. Procédé pour le réglage de la température de l'air dans des installations de climatisation de véhicule à une ou plusieurs zones, au moins deux espaces de mélange (1, 1') conçus séparément étant prévus pour le mélange d'au moins deux flux d'air (A, B et A', B') réglés différemment au niveau de la température, lesquels sont amenés après le mélange sous la forme de flux d'air (M, M') réglés ensemble au niveau de la température à l'espace intérieur du véhicule, l'un des flux d'air (B, B') arrivant dans chaque espace de mélange (1, 1') au moyen de clapets (5) commandés directement et les clapets (5) étant couplés entre eux, **caractérisé en ce que** l'un des flux d'air (A, A') arrive dans chaque espace de mélange (1, 1') au moyen d'un clapet antiretour (4, 4') s'autoréglant librement indépendamment l'un de l'autre et un équilibre de pression intervient entre les espaces de mélange (1, 1') et/ou les canaux d'air, par lesquels les flux d'air (M, M') réglés au niveau de la température sont amenés à l'espace intérieur du véhicule.

8. Procédé selon la revendication 7, **caractérisé en ce que** de l'air circule de l'espace de mélange (1 ou 1'), dans lequel règne une pression plus élevée, vers l'autre espace de mélange (1' ou 1) par une ou plusieurs dérivations (10).

9. Procédé selon la revendication 7 ou 8, **caractérisé en ce que**, dans le cas d'une différence de pression, de l'air est amené du canal d'air avec une pression supérieure, par lequel un flux d'air (M, M') réglé au niveau de la température est amené à l'espace intérieur du véhicule, vers l'autre canal, par lequel l'autre flux d'air (M, M') réglé au niveau de la température est amené à l'espace intérieur du véhicule, par une ou plusieurs dérivations (10).

10. Procédé selon la revendication 8 ou 9, **caractérisé en ce que** la dérivation est réglée.

11. Procédé selon la revendication 10, **caractérisé en ce que** la dérivation réglée en fonction de la différence de pression et/ou de la température (T_{M}, T_{M'}) dans les deux canaux d'air, par lesquels les flux d'air (M, M') réglés au niveau de la température sont amenés à l'espace intérieur du véhicule.

12. Procédé selon l'une quelconque des revendications 7 à 11, **caractérisé en ce qu'**un réglage intervient en ce sens que les deux flux d'air (A, A' et B, B' ) dans les deux espaces de mélange (1, 1') se trouvent dans le même rapport de proportion entre eux.

13. Procédé selon l'une quelconque des revendications 7 à 12, **caractérisé en ce que** la position des clapets (5) est réglée en fonction d'une différence de pression et/ou de température entre un point situé sur le système de canal d'air et l'espace intérieur du véhicule.

14. Procédé selon l'une quelconque des revendications 7 à 13, **caractérisé en ce que** la position des clapets (5) est réglée en fonction d'un étranglement sur la sortie d'air.
